(19) Europäisches Patentamt
European Patent Office
Office européen des brevets

(11) **EP 4 465 077 A1**

(12) **EUROPEAN PATENT APPLICATION**
published in accordance with Art. 153(4) EPC

(43) Date of publication:
**20.11.2024 Bulletin 2024/47**

(21) Application number: **22926450.2**

(22) Date of filing: **18.02.2022**

(51) International Patent Classification (IPC):
**G01S 7/41** (2006.01)

(52) Cooperative Patent Classification (CPC):
**G01S 7/41**

(86) International application number:
**PCT/CN2022/076734**

(87) International publication number:
**WO 2023/155116 (24.08.2023 Gazette 2023/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **CHANG, Guanghong
Shenzhen, Guangdong 518129 (CN)**
• **LI, Ting
Shenzhen, Guangdong 518129 (CN)**
• **CHENG, Zhiwen
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **SIGNAL SENDING METHOD AND APPARATUS**

(57) This application provides a signal sending method and apparatus. The method includes: determining, based on a quantity T of transmit antennas of a radar and a quantity Nc of signals transmitted through each transmit antenna in a frame, T codeword sequences that are in a one-to-one correspondence with T transmit antennas, where each of the T codeword sequences includes Nc codewords, each codeword sequence is used to process Nc signals of a transmit antenna, T>1, $N_C \geq 1$, both T and Nc are integers, a Doppler spectrum corresponding to the T codeword sequences includes a first region corresponding to a main lobe, and a second region and a third region that correspond to side lobes, and a maximum peak value of the side lobe in the second region is less than a maximum peak value of the side lobe in the third region. Therefore, Doppler dynamics in the second region are large, so that a probability of missing detection on a target can be reduced, the radar can sense a surrounding environment more comprehensively and accurately, and safety is improved.

700

Determine, based on a quantity T of transmit antennas of a radar and a quantity $N_C$ of signals transmitted through each transmit antenna in a frame, T codeword sequences that are in a one-to-one correspondence with T transmit antennas — 710

Send, through the T transmit antennas, signals processed by using the T codeword sequences — 720

FIG. 7

## Description

## TECHNICAL FIELD

This application relates to the field of radar technologies, and in particular, to a signal sending method and apparatus.

## BACKGROUND

A multiple input multiple output (multiple input multiple output, MIMO) radar is widely used in the field of autonomous driving because of good angular resolution performance of the MIMO radar. For example, the MIMO radar may be applied to an autonomous driving vehicle, and a plurality of antennas included in the MIMO radar may be disposed at a plurality of locations of a vehicle body to sense a surrounding environment of the vehicle.

The MIMO radar may transmit a linear frequency modulation signal (a transmitted signal for short below) through a transmit antenna to scan the air. If an obstacle is encountered, the transmitted signal is reflected by the obstacle to form an echo signal. The MIMO radar may receive the echo signal through a receive antenna and detect a target based on the echo signal and the transmitted signal, to measure a speed, a range, an angle, and the like of the detected target. Herein, the obstacle is the target detected by the radar.

The MIMO radar may scan a plurality of targets at the same time when transmitting a signal in a code division multiplexing (code division multiplexing, CDM) manner. The radar may obtain a Doppler spectrum based on the transmitted signal and the received echo signal, determine the detected target based on the Doppler spectrum, and then measure the target, for example, measure the range and the speed. However, in some cases, some targets correspond to main lobes with high amplitudes in a Doppler spectrum, and amplitudes of side lobes near the main lobes of the targets are also high. The targets may be referred to as strong targets for short. Some targets correspond to main lobes with low amplitudes in the Doppler spectrum. The targets may be referred to as weak targets for short. Because amplitudes of side lobes of strong targets are high, main lobes of some weak targets may be submerged. As a result, the weak targets are not detected.

## SUMMARY

This application provides a signal sending method and apparatus, to reduce a missing detection probability, so that a radar can sense a surrounding environment more comprehensively and accurately.

According to a first aspect, this application provides a signal sending method. The method may be performed by a signal sending apparatus. The signal sending apparatus may be, for example, a radar, or may be a component (such as a chip or a chip system) configured in the radar, or may be a logical module or software that can implement all or some functions of the signal sending apparatus. This is not limited in this application. For ease of understanding and description, the following uses the signal sending apparatus as an example to describe in detail the signal sending method provided in this application.

For example, the method includes: determining, based on a quantity T of transmit antennas of a radar and a quantity Nc of signals transmitted through each transmit antenna in a frame, T codeword sequences that are in a one-to-one correspondence with T transmit antennas, where each of the T codeword sequences includes Nc codewords, each codeword sequence is used to process Nc signals of a transmit antenna, $T>1$, $Nc \geq 1$, both T and Nc are integers, a Doppler spectrum corresponding to the T codeword sequences includes a first region corresponding to a main lobe, and a second region and a third region that correspond to side lobes, and a maximum peak value of the side lobe in the second region is less than a maximum peak value of the side lobe in the third region; and sending, through the T transmit antennas, signals processed by using the T codeword sequences.

It should be understood that the Doppler spectrum includes a main lobe and a side lobe. The main lobe may correspond to a region with a highest peak value in the Doppler spectrum, for example, the first region. The side lobe may correspond to a region other than the main lobe, for example, the second region and the third region. A horizontal axis of the Doppler spectrum may be a Doppler bin, and a vertical axis may be a level amplitude, a voltage amplitude, or the like, or may be a power or the like. This is not limited in this application. Correspondingly, the foregoing peak value is a maximum value of the level amplitude, the voltage amplitude, the power, or the like. It may be understood that there are a plurality of peaks in the Doppler spectrum, each peak may correspond to a peak value, and the region with the highest peak value may be a region corresponding to a maximum value in peak values respectively corresponding to the plurality of peaks in the Doppler spectrum.

It should be noted that, in the Doppler spectrum, a difference between a maximum peak value of the main lobe and a maximum peak value of the side lobe may be referred to as Doppler dynamics. It may be understood that greater Doppler dynamics indicate smaller impact of the side lobe and a smaller probability that a main lobe of a weak target is submerged.

Based on the foregoing technical content, in the Doppler spectrum corresponding to the T codeword sequences, the maximum peak value of the side lobe in the second region is less than the maximum peak value of the side lobe in the third region, that is, the second region may be used as a region of interest (region of interest, ROI), and a difference between the maximum peak value of the main lobe and the maximum peak value of the side lobe in the ROI is large, that is, Doppler dynamics are large. In this way, when a plurality of targets are detected, a side lobe of a strong target may not submerge a side lobe of a weak target, thereby reducing a missing detection probability, so that the radar can sense a surrounding environment more comprehensively and accurately, and safety is improved.

With reference to the first aspect, in some possible implementations of the first aspect, the Doppler spectrum is obtained by performing non-coherent integration (non-coherent integration, NCI) or coherent integration (coherent integration, CI) on signals that are sent through the T transmit antennas and that are obtained through decoding, Doppler bins corresponding to the first region are $d_0$, Doppler bins corresponding to the second region include a plurality of Doppler bins falling within a range of $[d_1, d_0)$ and $(d_0, d_2]$, and Doppler bins corresponding to the third region include a plurality of Doppler bins falling within a range of $(-\infty, d_1)$ and $(d_2, +\infty)$, where $d_1 < d_0 < d_2$.

It should be understood that, based on the T codeword sequences corresponding to the T transmit antennas and a received echo signal, the signals sent through the T transmit antennas may be obtained through decoding, and NCI or CI is performed on the signals obtained through decoding, to obtain the Doppler spectrum.

In the Doppler spectrum, side lobes are distributed on two sides of the main lobe, that is, Doppler bins corresponding to the side lobes are distributed on two sides of Doppler bins corresponding to the main lobe. However, in this application, because a region in which the side lobes are located is further divided, the ROI is located on two sides of the main lobe, and other regions are located on two sides of the ROI. In this way, distribution such as the first region, the second region, and the third region from the main lobe to the side lobes is obtained.

Further, the second region includes one or more sub-regions, each sub-region corresponds to a parameter, and the parameter corresponding to each sub-region is a maximum peak value of a side lobe in the sub-region.

In other words, the second region may be further divided into several sub-regions. Herein, a maximum peak value of a side lobe in each sub-region is defined as a parameter, and a peak value of the side lobe in each sub-region is optimized by controlling the parameter. In this way, the maximum peak value in each sub-region may be controlled to different degrees, that is, maximum peak values of side lobes in different sub-regions may also be reduced to different degrees based on a requirement, so that more flexible control can be implemented.

It should be noted that, the maximum peak values of the side lobes in the different sub-regions are reduced to different degrees is described relative to Doppler corresponding to an unoptimized codeword sequence. In other words, if a signal is separately sent directly based on a randomly generated codeword sequence and based on the T codeword sequences provided in this application, in obtained Doppler spectrums, a maximum peak value of the former is greater than a maximum peak value of the latter in side lobes corresponding to second regions.

Optionally, each sub-region in the second region includes at least one Doppler bin, and the parameter corresponding to each sub-region is determined from a spectrum of at least one Doppler bin in the corresponding sub-region.

With reference to the first aspect, in some possible implementations of the first aspect, the T codeword sequences are from one group of at least one group of target codeword sequences, and any one group of the at least one group of target codeword sequences includes the first region, the second region, and the third region.

The at least one group of target codeword sequences may be understood as an optimized codeword sequence, and any group of target codeword sequences has the foregoing feature that the maximum peak value of the side lobe in the second region is less than the maximum peak value of the side lobe in the third region. Therefore, the any one group of the at least one group of target codeword sequences is selected for use, so that the side lobe in the second region can be controlled to a low peak value, and interference to the weak target can be reduced.

Herein, optimization may be understood as optimization on a codeword sequence, and may specifically mean that a part of codeword sequences are selected from a plurality of groups of codeword sequences as a target codeword sequence, and in a Doppler spectrum corresponding to the part of codeword sequences, Doppler dynamics in a second region (that is, an ROI) reach a maximum value or reach an expected value. Therefore, the optimization herein may be optimization on the Doppler dynamics in the second region.

For ease of distinguishing and description, a group of target codeword sequences from which the T codeword sequences are is denoted as a first codeword sequence group in this specification. The first codeword sequence group should satisfy a use requirement of the radar. For example, each codeword sequence in the first codeword sequence group should include Nc codewords, and the first codeword sequence group should include more than or equal to T codeword sequences.

If a quantity of codeword sequences included in the first codeword sequence group is greater than T, for example, denoted as L, the T codeword sequences may be randomly selected from the L codeword sequences, or may be T codeword sequences selected from the L codeword sequences based on a preset function.

With reference to the first aspect, in some possible implementations of the first aspect, the at least one group of target codeword sequences is determined from a plurality of groups of codeword sequences based on a preset function, and the preset function is related to one or more parameters respectively corresponding to the one or more sub-regions in the second region.

To obtain the at least one group of target codeword sequences, a preset function related to a parameter corresponding to each sub-region in the second region may be defined. Therefore, all target codeword sequences determined based on the preset function have the foregoing feature that the maximum peak value of the side lobe in the second region is less than the maximum peak value of the side lobe in the third region.

In a possible design, the preset function is weighting of the one or more parameters corresponding to distribution of the one or more sub-regions.

Different weights are applied to different sub-regions, and different degrees of control may be performed on the different sub-regions in the Doppler spectrum, so that maximum peak values of side lobes in the different sub-regions may also be reduced to different degrees based on a requirement, thereby implementing more flexible control.

With reference to the first aspect, in some possible implementations of the first aspect, the preset function is further related to a degree of cross-correlation between the signals transmitted through the T transmit antennas.

The main lobe may be further optimized based on the control on the peak value of the side lobe. A lower degree of cross-correlation indicates smaller interference to the peak value of the main lobe and a more accurate measurement result. Therefore, a comprehensive and accurate measurement result can be obtained.

It should be understood that, in addition to the foregoing optimization on the Doppler dynamics in the second region, the optimization further includes optimization on the main lobe. The optimization on the main lobe may also be understood as optimization on the codeword sequence, and may specifically mean that a part of codeword sequences with small interference to peak values of main lobes are selected from a plurality of groups of codeword sequences as the target codeword sequence.

In a possible design, the preset function is the degree of cross-correlation between the signals transmitted through the T transmit antennas and the weighting of the one or more parameters.

Different weights are respectively applied to the first region and different sub-regions in the second region, so that different degrees of control may be performed on different regions. In addition to reducing interference to the main lobe, maximum peak values of side lobes in the different sub-regions may be further controlled to be reduced to different degrees based on a requirement, thereby implementing more flexible control.

It should be understood that the foregoing enumerated preset functions are merely two possible designs, and this application includes but is not limited thereto.

A codeword sequence with better performance may be selected from a plurality of codeword sequences as a candidate target codeword sequence for use based on the preset function.

Optionally, the any one group of the at least one group of target codeword sequences satisfies that a function value obtained based on the preset function is less than a first preset threshold.

Optionally, the at least one group of target codeword sequences is obtained by determining at least one group of codeword sequences from the plurality of groups of codeword sequences according to a preset rule, and performing iterative update on the at least one group of codeword sequences until a quantity of iterative update times reaches a second preset threshold.

It should be understood that the foregoing enumerated conditions for selecting the target codeword sequence are merely examples, and this application includes but is not limited thereto.

With reference to the first aspect, in some possible implementations of the first aspect, the method further includes: obtaining a plurality of groups of candidate target codeword sequences, where each group of the plurality of groups of target codeword sequences corresponds to one of a plurality of parameter combinations, each parameter combination includes a quantity of transmit antennas, a quantity of signals transmitted through each transmit antenna in a frame, and a quantity of Doppler bins corresponding to the second region, and at least two parameters in any two of the plurality of parameter combinations have different values. The determining, based on a quantity T of transmit antennas of a radar and a quantity Nc of signals transmitted through each transmit antenna in a frame, T codeword sequences that are in a one-to-one correspondence with T transmit antennas includes: determining one group of target codeword sequences from the plurality of groups of target codeword sequences based on the quantity T of transmit antennas of the radar, the quantity Nc of signals transmitted through each transmit antenna in the frame, the quantity of Doppler bins corresponding to the second region, and a correspondence between the plurality of groups of target codeword sequences and the plurality of parameter combinations, where the determined group of target codeword sequences includes the T codeword sequences that are in the one-to-one correspondence with the T transmit antennas.

Because the T codeword sequences are determined from the plurality of groups of codeword sequences, if the T codeword sequences are selected only during encoding, more time is required. To reduce time consumption, the plurality of groups of target codeword sequences may be determined in advance for different parameter combinations, so that candidate target codeword sequences can be enriched, to be applicable to different radars and used in different scenarios.

With reference to the first aspect, in some possible implementations of the first aspect, the determining, based on a quantity T of transmit antennas of a radar and a quantity Nc of signals transmitted through each transmit antenna in a frame, T codeword sequences that are in a one-to-one correspondence with T transmit antennas includes: obtaining the plurality of groups of codeword sequences based on the quantity T of transmit antennas of the radar and the quantity Nc of signals transmitted through each transmit antenna in the frame, where each group of codeword sequences includes T codeword sequences, and each codeword sequence includes NC codewords; determining a function value of each group of the plurality of groups of codeword sequences based on the preset function; and determining at least one group of target codeword sequences from the plurality of groups of codeword sequences based on the function value of each group of the plurality of groups of codeword sequences; and determining one group of target codeword sequences from the at least one group of target codeword sequences, where the T codeword sequences that are in the one-to-one correspondence with the T transmit antennas are from the determined group of target codeword sequences.

In addition to determining the plurality of groups of candidate target codeword sequences in advance, one or more groups of target codeword sequences may alternatively be determined based on an actual parameter and a measurement requirement of the radar during encoding. Because the one or more groups of target codeword sequences are determined based on the actual parameter and the measurement requirement of the radar, T codeword sequences in any one group of target codeword sequences may be used for signal encoding of the radar. In this way, a problem that a large quantity of storage resources may need to be occupied because the plurality of groups of candidate target codeword sequences are determined in advance can be avoided.

With reference to the first aspect, in some possible implementations of the first aspect, the method further includes: determining, based on the quantity Nc of signals transmitted through each transmit antenna of the radar in the frame, a required speed measurement range, and a pulse repetition interval PRI, a quantity of Doppler bins corresponding to the second region.

It should be understood that the quantity of Doppler bins corresponding to the second region may include a quantity of Doppler bins corresponding to each sub-region in the second region.

If the second region includes only one sub-region, that is, the side lobe in the second region is optimized on the whole. It is assumed that the quantity of Doppler bins corresponding to the second region is $N_R$, where $N_R < N_C$, and $N_R$ is an integer. The quantity Nc of signals transmitted through each transmit antenna in the frame, a required speed measurement range V, and a speed measurement range $V_{PRI}$ corresponding to the PRI satisfy the following relationship:

$$\frac{N_R}{\eta \cdot N_C} = \frac{V}{V_{PRI}}$$

$\eta$ is an interpolation coefficient, and $\eta$ is a positive number.

The quantity Nc of signals transmitted through each transmit antenna in the frame and the required speed measurement range V may be determined in advance, and the PRI may be adjusted based on the speed measurement range. Therefore, the speed measurement range $V_{PRI}$ corresponding to the PRI may be further determined, and the quantity $N_R$ of Doppler bins corresponding to the second region may be further determined.

With reference to the first aspect, in some possible implementations of the first aspect, the Nc signals are Nc pulse signals, and the signals processed by using the T codeword sequences are T encoded signals. Before the sending, through the T transmit antennas, signals processed by using the T codeword sequences, the method further includes: processing Nc pulse signals of a transmit antenna based on each of the T codeword sequences, to obtain an encoded signal corresponding to the transmit antenna.

For ease of distinguishing, in this specification, a signal that is not processed is denoted as a pulse signal, for example, a chirp (chirp) signal, and a signal processed by using a codeword sequence is denoted as an encoded signal. Processing may be specifically initial phase modulation. The T codeword sequences are in a one-to-one correspondence with the T transmit antennas, and Nc codewords in each codeword sequence are used to process pulse signals of a corresponding transmit antenna to obtain a sequence formed by Nc signals. The sequence may be referred to as an encoded signal. It should be noted that a sequence obtained after Nc pulse signals transmitted through a transmit antenna in each frame is processed by using a codeword sequence is referred to as an encoded signal.

According to a second aspect, this application provides a signal sending apparatus, including a module or a unit configured to implement the method according to any one of the first aspect or the possible implementations of the first aspect. It should be understood that each module or unit may implement a corresponding function by executing a computer program.

According to a third aspect, this application provides a signal sending apparatus, including a processor, where the processor is configured to perform the signal sending method according to any one of the first aspect or the possible implementations of the first aspect.

The apparatus may further include a memory, configured to store instructions and data. The memory is coupled to the processor. When executing the instructions stored in the memory, the processor can implement the method described in the foregoing aspect. The apparatus may further include a communication interface.

The communication interface is used by the apparatus to communicate with another device. For example, the communication interface may be a transceiver, a circuit, a bus, a module, or another type of communication interface.

According to a fourth aspect, this application provides a radar, where the radar includes a memory and a processor, the memory is configured to store program code, and the processor is configured to invoke the program code to implement the signal sending method according to any one of the first aspect or the possible implementations of the first aspect.

According to a fifth aspect, this application provides a terminal, including the foregoing radar.

With reference to the fifth aspect, in some possible implementations of the fifth aspect, the terminal is a vehicle.

According to a sixth aspect, this application provides a chip, where the chip includes at least one processor, configured to support implementation of the functions according to any one of the first aspect or the possible implementations of the first aspect, for example, sending or processing data and/or information in the foregoing method.

In a possible design, the chip further includes a memory. The memory is configured to store program instructions and data. The memory is located inside the processor or outside the processor.

The chip may include a chip, or may include a chip and another discrete device.

According to a seventh aspect, this application provides a computer-readable storage medium, including a computer program. When the computer program is run on a computer, the computer is enabled to implement the method according to any one of the first aspect or the possible implementations of the first aspect.

According to an eighth aspect, this application provides a computer program product. The computer program product includes a computer program (which may also be referred to as code or instructions). When the computer program is run, a computer is enabled to perform the method according to any one of the first aspect or the possible implementations of the first aspect.

It should be understood that the second aspect to the eighth aspect of this application correspond to the technical solutions in the first aspect of this application, and beneficial effects achieved by the aspects and the corresponding feasible implementations are similar. Details are not described again.

## BRIEF DESCRIPTION OF DRAWINGS

FIG. 1 is a schematic diagram of an application scenario to which a method provided in an embodiment of this application is applicable;
FIG. 2 is a schematic diagram of a plurality of antennas disposed at different locations of a vehicle body;
FIG. 3 is a schematic diagram of radiating a processed pulse signal to space through a plurality of transmit antennas;
FIG. 4 is a schematic diagram of waveforms of transmitted signals sent through two transmit antennas;
FIG. 5 is a schematic diagram of processing a received echo signal;
FIG. 6 is a schematic diagram of a Doppler spectrum according to an embodiment of this application;
FIG. 7 is a schematic flowchart of a signal sending method according to an embodiment of this application;
FIG. 8 is another schematic diagram of a Doppler spectrum according to an embodiment of this application;
FIG. 9 is another schematic flowchart of a signal sending method according to an embodiment of this application; and
FIG. 10 and FIG. 11 are schematic block diagrams of signal sending apparatuses according to embodiments of this application.

## DESCRIPTION OF EMBODIMENTS

The following describes technical solutions of this application with reference to the accompanying drawings.

To facilitate understanding of embodiments of this application, terms used in the following are first briefly described.

1. Pulse signal, encoded signal, and echo signal: In embodiments of this application, for ease of distinguishing and description, a signal on which initial phase modulation is not performed is referred to as a pulse signal, a signal on which initial phase modulation is performed is referred to as an encoded signal, and a received signal is referred to as an echo signal. It may be understood that, the encoded signal corresponds to the echo signal, and the echo signal is a signal that is received through a receive antenna and that is obtained after the encoded signal is transmitted and then is reflected by an obstacle.

2. Doppler frequency shift: When a radar transmits a signal (such as an encoded signal) through a transmit antenna to scan the air, if the radar encounters an obstacle that has radial motion relative to the radar, an echo signal is generated through reflection of the obstacle. The radar receives the echo signal through a receive antenna. A frequency difference between a frequency of the echo signal and a frequency of the transmitted signal is referred to as a Doppler frequency shift.

3. Linear frequency modulation signal: a type of pulse signal. The linear frequency modulation signal is also referred to as a chirp (chirp) signal, and is an electromagnetic wave signal whose frequency varies linearly with time. That the frequency varies linearly usually means that the frequency varies linearly in a transmitting periodicity. For example, a waveform of the linear frequency modulation signal may be usually a sawtooth wave, a triangular wave, or the like, or may be another possible waveform. This application includes but is not limited thereto.

The waveform of the linear frequency modulation signal is a frequency modulated continuous wave (frequency modulated continuous wave, FMCW). That is, a transmit wave is a high-frequency continuous wave, and a frequency varies with time according to a sawtooth wave rule.

4. Doppler bin (Doppler bin): In a spectrum graph obtained by performing fast Fourier transform (fast Fourier transform, FFT) on data, a frequency interval or resolution of a Doppler domain usually depends on a sampling rate and a quantity of sampling points. For example, Doppler bin=sampling rate/quantity of sampling points.

5. CDM: A same pulse signal is encoded by using different orthogonal codes to obtain different encoded signals. For a MIMO radar, signals sent through different transmitting channels are different encoded signals. Because the orthogonal code has a high autocorrelation characteristic and an extremely low cross-correlation characteristic, different transmitting channels may be distinguished between through decoding during receiving. A signal is sent in a CDM manner, so that time-frequency resource utilization can be improved.

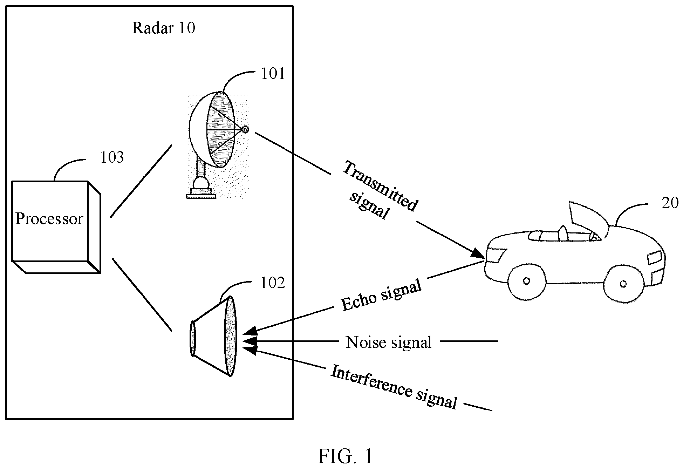

For ease of understanding, the following first briefly describes, with reference to FIG. 1, an application scenario to which a method provided in an embodiment of this application is applicable.

FIG. 1 is a schematic diagram of an application scenario to which a method provided in an embodiment of this application is applicable. It should be noted that FIG. 1 shows merely an example of the application scenario to which this application is applicable, and does not limit the application scenario. FIG. 1 shows merely an example of components included in a radar 10, and does not limit the radar 10.

Refer to FIG. 1. The radar 10 and a vehicle 20 are shown in the application scenario, and the vehicle 20 is an obstacle detected by the radar 10.

The radar 10 may include a transmit antenna 101, a receive antenna 102, and a processor 103. The radar 10 may be deployed on a vehicle, and is configured to sense a surrounding environment of the vehicle.

The transmit antenna 101 may transmit a signal. In the following, for ease of description, the signal transmitted through the transmit antenna 101 is referred to as a transmitted signal. The transmit antenna 101 may transmit signals in a plurality of directions. For example, the processor 103 may control the transmit antenna 101 to transmit signals in different directions. After the transmitted signal reaches the obstacle, the obstacle may reflect the transmitted signal, and a signal obtained by reflecting the transmitted signal by the obstacle may be referred to as an echo signal. As shown in FIG. 1, the vehicle 20 is an example of the obstacle. After reaching the vehicle 20, the transmitted signal is reflected to form an echo signal.

The radar 10 may include one or more transmit antennas 101. When the radar 10 includes a plurality of transmit antennas 101, the plurality of transmit antennas 101 may be disposed at different locations of a vehicle body, so that the transmit antennas 101 may transmit signals in different directions in a larger range.

The receive antenna 102 may receive a signal. The receive antenna 102 may receive the echo signal and an interference signal. For example, the interference signal may include an environmental noise signal, a hacker attack signal, or a signal obtained by reflecting a transmitted signal of another radar by the obstacle.

The radar 10 may include one or more receive antennas 102. When the radar 10 includes a plurality of receive antennas 102, the plurality of receive antennas 102 may be disposed at different locations of the vehicle body, so that the receive antennas 102 may receive echo signals from more obstacles.

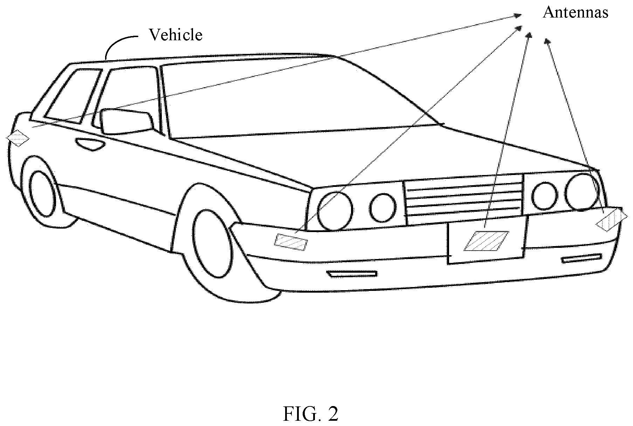

FIG. 2 shows an example of a plurality of antennas disposed at different locations of a vehicle body. The antennas in FIG. 2 may include a transmit antenna and a receive antenna. As shown in FIG. 2, different antennas are respectively disposed at a front end, a left front end, a right front end, and a side surface of a vehicle. Although not shown in the figure, it may be understood that the antenna may be further disposed at a rear end of the vehicle. This application includes but is not limited thereto.

Still refer to FIG. 1. The processor 103 may obtain the signal received through the receive antenna 102, and determine the echo signal in the signal received through the receive antenna 102. The processor 103 may further obtain the signal transmitted through the transmit antenna 101, and perform target detection and measurement on the obstacle based on the transmitted signal and the echo signal. Herein, the obstacle is a target detected by the radar, and is also referred to as an object. Target detection: Measurement on a target may include: measurement on a speed of the target (that is, speed measurement), measurement on a range between the target and the radar (that is, range measurement), measurement on a location of the target (that is, locating), and the like. The target may be a person, a vehicle, an airplane, or the like. This application includes but is not limited thereto.

For example, the measurement on the speed of the target may be measurement on a radial motion speed of the target relative to the radar, and the speed of the target may satisfy: $v_t=\lambda \times f_d/2$. $v_t$ represents a radial motion speed of a target object relative to a radar, $\lambda$ represents a wavelength of a transmitted signal, and $f_d$ represents a frequency shift of an echo signal relative to the transmitted signal, that is, a Doppler frequency shift.

The measurement on the range of the target may be measurement on a range of the target relative to the radar. The range of the target may be determined based on a time difference between the signal transmitted through the transmit antenna and the echo signal received through the receive antenna.

After the transmitted signal transmitted through the transmit antenna 101 reaches the target, the target may reflect the transmitted signal. The receive antenna 102 may receive the echo signal obtained by reflecting the transmitted signal by the target. Because there is still an environmental noise signal, a clutter interference signal, or the like, the receive antenna 102 may further receive the environmental noise signal, the clutter interference signal, or the like. For ease of description in the following, the signal received through the receive antenna 102 is denoted as a received signal in the following. It may be understood that the received signal includes an echo signal, a noise signal, an interference signal, and the like.

The processor 103 may determine the echo signal in the received signal, and perform target detection and measurement based on the echo signal and the transmitted signal.

As described above, the radar 10 may include the plurality of transmit antennas and the plurality of receive antennas. When the radar may include the plurality of transmit antennas and the plurality of receive antennas, the radar may be referred to as a MIMO radar.

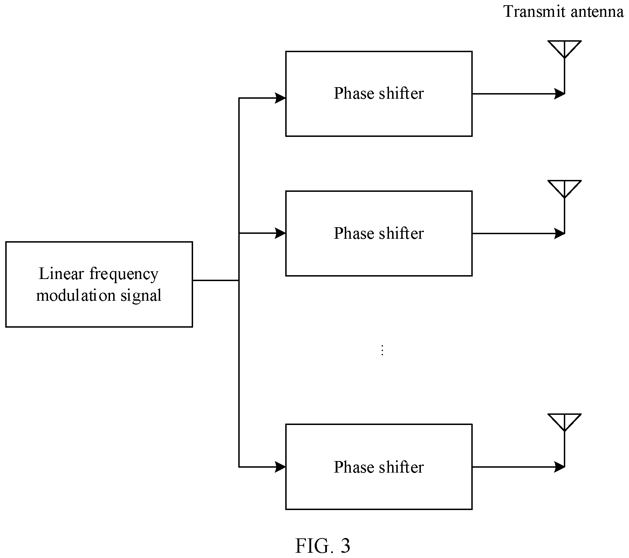

In the MIMO radar, the plurality of transmit antennas may be integrated into one transmitter, and the plurality of transmit antennas may share a same pulse signal. After a phase shifter performs phase shifting over different transmitting channels, the pulse signal is radiated to space through different transmit antennas. FIG. 3 is a schematic diagram of radiating a processed pulse signal to space through a plurality of transmit antennas. It should be understood that a process in which the pulse signal is radiated to the space through the plurality of transmit antennas shown in FIG. 3 may be implemented by a processor by controlling each component.

For example, the pulse signal may be, for example, generated by an oscillator. After different phase shifters modulate an initial phase of the pulse signal over a plurality of transmitting channels, the pulse signal is radiated to the space through different transmit antennas. The pulse signal may be, for example, a chirp signal. That is, a radar may send, through different transmit antennas, chirp signals with a same waveform and different time start points. An interval at which the chirp signal is transmitted may be referred to as a pulse repetition interval (pulse repetition interval, PRI). The radar may transmit one chirp signal at one PRI. Duration of the chirp signal may be less than or equal to one PRI. The radar may send a plurality of chirp signals in one scanning periodicity, and the scanning periodicity may be referred to as a frame (frame).

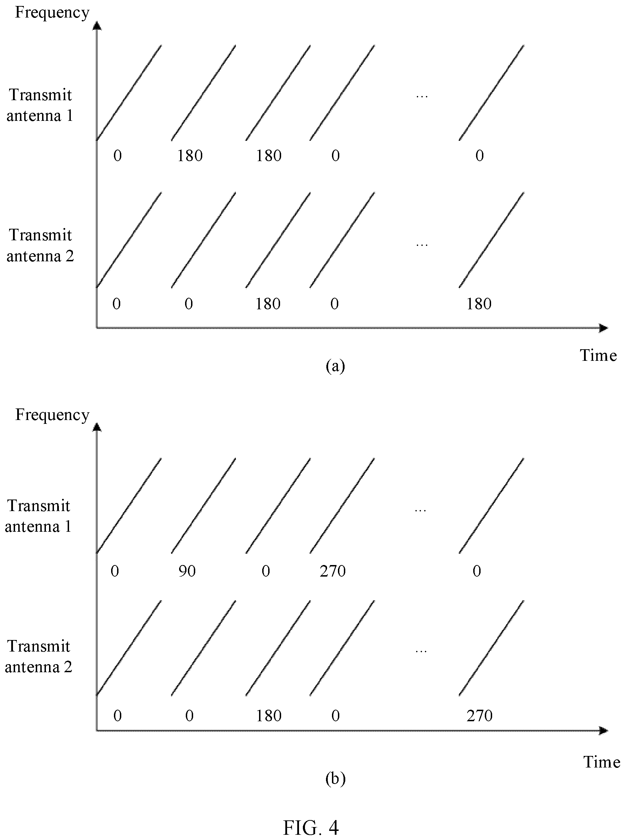

FIG. 4 shows waveforms of transmitted signals sent through two transmit antennas. Sources of the transmitted signals sent through the two transmit antennas may be a chirp signal. Different initial phases of different transmit antennas may be obtained by performing different initial phase modulation based on the chirp signal. An angle for initial phase modulation may be any value, for example, may be selected from {0°, 180°}, or may be selected from {0°, 90°, 180°, 270°}. This application includes but is not limited thereto. In this way, a signal may be sent in a CDM manner of MIMO.

For example, as shown in (a) in FIG. 4, initial phases of a transmit antenna 1 are sequentially [0 180 180 0 ⋯ 0], and initial phases of a transmit antenna 2 are sequentially [0 0 180 0 ⋯ 180]. For another example, as shown in (b) in FIG. 4, initial phases of a transmit antenna 1 are sequentially [0 90 0 270 ⋯ 0], and initial phases of a transmit antenna 2 are sequentially [0 0 180 0 ⋯ 270]. In the figure, units of the initial phases are angles.

It should be understood that the initial phases of the transmit antennas enumerated in FIG. 4 are merely examples, and should not constitute any limitation. It should be further understood that the chirp signal may alternatively be replaced with another pulse signal. This is not limited in this application.

When receiving the echo signal, the receive antenna 102 inevitably encounters the noise signal, the clutter interference signal, and the like. To select a useful target and suppress noise and interference, the processor 103 may process the signal received through the receive antenna 102, to perform spectrum analysis and obtain a range, a speed, and the like of the target relative to the radar.

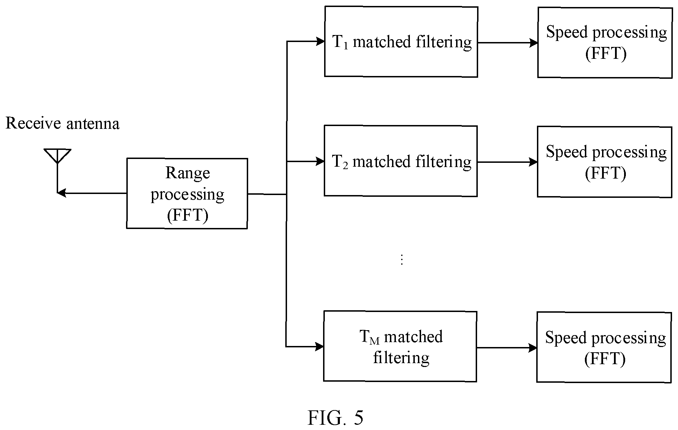

For example, for a specific process in which the processor 103 processes the received echo signal, refer to FIG. 5. FIG. 5 is a schematic diagram of processing a received echo signal.

First, one time of fast Fourier transform (fast Fourier transform, FFT) is performed on the echo signal to obtain a range spectrum. A frequency in the range spectrum may uniquely correspond to a range of a target. One time of FFT may also be referred to as range processing.

Then, matching filtering (matched filtering) is separately performed on echo signals, at a same range, of signals transmitted through transmit antennas. A purpose of the matched filtering is to enable an output signal-to-noise ratio of the transmitted signal to reach a maximum value at a specific moment when an input power signal-to-noise ratio of the transmitted signal is fixed, to match the input transmitted signal. In embodiments of this application, a specific operation of the matched filtering may be that a dot product is performed on echo signal with a same range unit and different chirp indexes and a conjugate of a codeword sequence. If the codeword sequence is denoted as s, and the echo signals with the same range unit and the different chirp indexes are denoted as r, a result t of a matching operation may satisfy: $t = r \cdot s^*$. $s^*$ represents a conjugate of s.

It should be understood that a matched filtering process is a decoding process, and t is a decoded signal.

A range Doppler response graph (range Doppler matrix, RDM) may be obtained by performing a second time of FFT on the decoded signal. The RDM may be presented on a terminal, for example, presented on a display of a vehicle, to sense a surrounding environment of a vehicle body. A tangent plane of a given range unit in the RDM may be referred to as a Doppler spectrum, and may reflect a Doppler frequency of a target. Therefore, the tangent plane is referred to as the Doppler spectrum. In addition, because a Doppler frequency is in a one-to-one correspondence with a speed, the tangent plane may also be referred to as a speed spectrum. The second time of FFT may also be referred to as speed processing.

In embodiments of this application, the Doppler spectrum may be obtained by performing non-coherent integration based on signals (that is, decoded signals) that are sent through the foregoing plurality of transmit antennas and that are obtained through decoding, or may be obtained by performing coherent integration based on signals that are sent through the foregoing plurality of transmit antennas and that are obtained through decoding. This is not limited in this application.

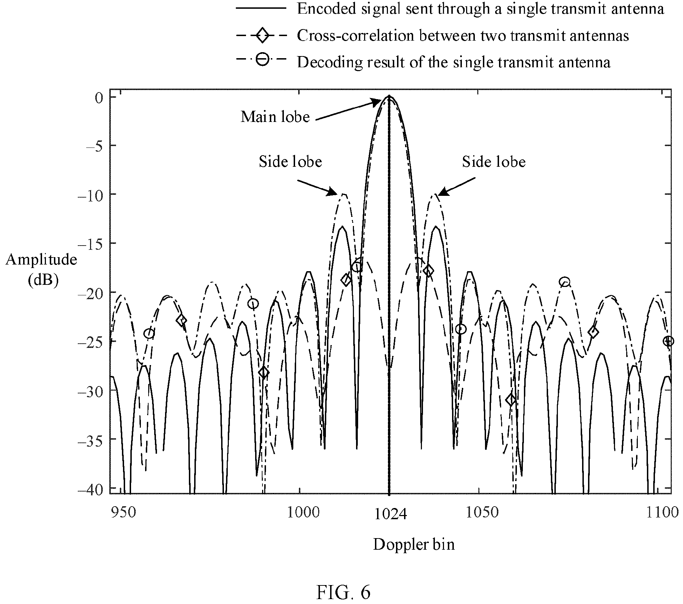

FIG. 6 shows an example of a Doppler spectrum according to an embodiment of this application. A horizontal axis of the Doppler spectrum is a Doppler bin (Doppler bin), and a vertical axis is a vertical axis obtained after two times of FFT. The vertical axis may be a level amplitude, a voltage amplitude, or the like, or may be a power or the like. This is not limited in this application. FIG. 6 shows an example in which the level amplitude is used as the vertical axis, and a unit is dB. Assuming that a radar has two transmit antennas, FIG. 6 shows an encoded signal sent through one transmit antenna, cross-correlation between the two transmit antennas, and a decoding result of the encoded signal sent through the transmit antenna. It can be learned that the decoding result and the encoded signal are close to each other at a Doppler bin corresponding to a main lobe, but at other Doppler bins, an amplitude of the decoding result is higher than that of the encoded signal.

It is assumed that the radar detects a target that is denoted as a target A for ease of distinguishing and description. The Doppler spectrum obtained by the radar based on the echo signal is that shown in FIG. 6. An amplitude near a Doppler bin 1024 reaches a maximum value, the cross-correlation between the two transmit antennas is also low near the Doppler bin 1024, and a peak at this location is a main lobe. Peaks on two sides of the main lobe are referred to as side lobes. As the Doppler bin gradually moves away from 1024, an amplitude of the side lobe becomes lower, and a maximum value is approximately -15 dB. A difference between a maximum value of the main lobe and a maximum value of the side lobe may be referred to as Doppler dynamics. The Doppler dynamics shown in FIG. 6 are approximately 15 dB.

However, in an actual scenario, the radar may not detect only one target. A target B is also detected when the target A is detected. The target B also reflects the transmitted signal to form an echo signal, and the echo signal is received by the radar. In this case, the radar may obtain a Doppler spectrum based on the echo signal from the target A and the echo signal from the target B. Researchers find that, in some cases, an amplitude of a main lobe corresponding to the target B is low, or even lower than the amplitude of the side lobe of the target A. For example, the amplitude of the main lobe corresponding to the target B is -20 dB, and is less than the maximum value -15 dB of the amplitude of the side lobe of the target A. In this way, the target B may be submerged by the side lobe of the target A. As a result, the target B is not detected. Missing detection on a target makes the vehicle provided with the radar not comprehensively and not accurately sense the surrounding environment, and there is a great safety risk.

If Doppler dynamics of a strong target can be increased as much as possible, a probability that a part of targets are submerged in a side lobe of another target can be reduced, and a missing detection probability can be reduced. Therefore, how to increase Doppler dynamics becomes an urgent technical problem to be resolved.

This application provides a method. A Doppler spectrum corresponding to each group of codeword sequences is divided into a plurality of regions, and a codeword sequence is selected based on a maximum peak value in each region by using a predefined indicator function and a preset condition, so that a maximum peak value of a side lobe in a region of interest in a Doppler spectrum corresponding to the selected codeword sequence is less than that in another region, that is, Doppler dynamics of the region of interest are as large as possible. In this way, a side lobe of a strong target does not submerge a main lobe of a weak target, to help reduce a missing detection probability, so that a radar can sense a surrounding environment more comprehensively and accurately, and safety can be greatly improved.

The following describes in detail a method provided in embodiments of this application with reference to a plurality of accompanying drawings. It should be understood that the method provided below may be performed by a signal sending apparatus, or may be performed by a component such as a chip or a chip system configured in the signal sending apparatus, or may be another module that can invoke a program to implement all or some functions of the signal sending apparatus. This is not limited in this application. For example, the signal sending apparatus may be a radar, or may be a component in the radar. This is not limited in embodiments of this application.

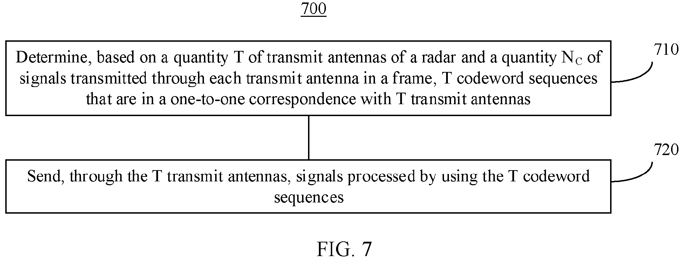

FIG. 7 is a schematic flowchart of a signal sending method according to an embodiment of this application. The method 700 shown in FIG. 7 includes the following steps.

Step 710: Determine, based on a quantity T of transmit antennas of a radar and a quantity Nc of signals transmitted through each transmit antenna in a frame, T codeword sequences that are in a one-to-one correspondence with T transmit antennas.

Step 720: Send, through the T transmit antennas, signals processed by using the T codeword sequences.

The quantity T of transmit antennas of the radar and the quantity Nc of signals (which are specifically pulse signals) transmitted through each transmit antenna in the frame may be predefined. In this embodiment of this application, the radar may have a plurality of transmit antennas. In other words, T may be an integer greater than 1. Each transmit antenna may correspond to a transmitting channel. Each transmit antenna may transmit one or more pulse signals in a frame, that is, Nc may be an integer greater than or equal to 1.

The quantity Nc of pulse signals transmitted through each transmit antenna in the frame may be determined based on a speed measurement range of the radar and a pulse repetition interval (pulse repeat interval, PRI).

The speed measurement range of the radar may be determined based on a requirement. For example, the speed measurement range may be predicted based on a detected target, or may be manually defined. This is not limited in this application.

The PRI is also related to a target detection and measurement requirement. If speed measurement is required, the PRI may be adjusted. For example, when Nc is fixed, a higher required speed measurement range indicates a smaller adjusted PRI. In other words, different PRIs may correspond to different speed measurement ranges. It should be noted that the speed measurement range corresponding to the PRI should be greater than a maximum value of the required speed measurement range. If range or angle measurement is required, the PRI does not need to be adjusted.

As described above, one PRI is a time interval between two pulse signals consecutively transmitted through a same transmit antenna. Therefore, when a frame length is fixed, if the PRI is determined, the quantity Nc of pulse signals transmitted through each transmit antenna in the frame may be determined. The PRI may be determined by the speed measurement range of the radar (for the speed measurement) or predefined (for the range measurement or the angle measurement). Therefore, the quantity Nc of pulse signals transmitted through each transmit antenna in the frame may be determined.

In this embodiment of this application, the T codeword sequences may be in the one-to-one correspondence with the T transmit antennas. Each codeword sequence includes Nc codewords, and may be used to process Nc signals of a transmit antenna to obtain a processed signal. For example, each codeword sequence may be used to perform initial phase modulation on Nc pulse signals of a transmit antenna to obtain an encoded signal. A signal that is radiated to space through each transmit antenna is a processed signal, for example, an encoded signal. It should be understood that a signal that is transmitted through a transmit antenna and that is obtained by processing Nc pulse signals is a signal that is sent through the transmit antenna in a frame, and is a sequence formed by Nc signals, and the signal is referred to as an encoded signal.

For example, with reference to the foregoing example in (a) in FIG. 4, T=2, in a codeword sequence corresponding to a transmit antenna, angles used by codewords to perform initial phase adjustment on pulse signals are respectively 0°, 180°, 180°, 0°, ..., and 0°, and in a codeword sequence corresponding to another transmit antenna, angles used by codewords to perform initial phase adjustment on pulse signals are respectively 0°, 0°, 180°, 0°, ..., and 180°. For ease of distinguishing between different angles, the two codeword sequences may be respectively represented as vectors [-1 1 1 -1 ··· -1] and [-1 -1 1 -1 ... 1], where -1 indicates that an initial phase adjustment angle is 0°, and 1 indicates that an initial phase adjustment angle is 180°.

It should be understood that the initial phase adjustment angle is not limited to 0° and 180°. In an actual design, an angle for initial phase modulation may cover any angle. This is described above with reference to FIG. 4, and details are not described herein again. In addition, codewords indicating different phase adjustment angles are not limited only to 1 and -1. This application includes but is not limited thereto.

It should be further understood that representing the codeword sequence as a vector is merely a possible representation form, and the codeword sequence may alternatively be represented as an ordered array, a queue, or the like. This application includes but is not limited thereto.

In this embodiment of this application, a Doppler spectrum corresponding to the T codeword sequences includes a first region corresponding to a main lobe, and a second region and a third region that correspond to side lobes, and a maximum peak value of the side lobe in the second region is less than a maximum peak value of the side lobe in the third region.

In other words, an echo signal of the signals that are sent through the T transmit antennas and that are processed by using the T codeword sequences may be decoded to obtain the signals sent through the T transmit antennas. A Doppler spectrum may be obtained based on the signals obtained through decoding, for example, through non-coherent integration or coherent integration. In the obtained Doppler spectrum, a region in which side lobes are located is divided into the second region and the third region, and the maximum peak value of the side lobe in the second region is less than the maximum peak value of the side lobe in the third region.

The second region is located on two sides of the first region, and the third region is located on two sides of the second region. For example, Doppler bins corresponding to the first region are $d_0$, Doppler bins corre-

sponding to the second region include a plurality of Doppler bins falling within a range of $[d_1, d_0)$ and $(d_0, d_2]$, and Doppler bins corresponding to the third region include a plurality of Doppler bins falling within a range of $(-\infty, d_1)$ and $(d_2, +\infty)$, where $d_1 < d_0 < d_2$.

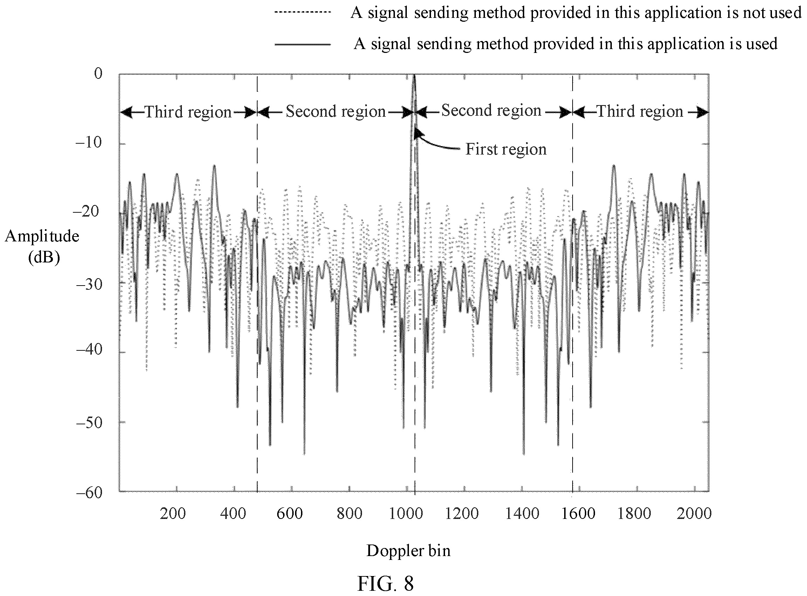

FIG. 8 shows a Doppler spectrum according to an embodiment of this application. A horizontal axis of the Doppler spectrum is a Doppler bin, and a vertical axis is a level amplitude, where a unit is dB. Two curves shown in FIG. 8 respectively show a Doppler spectrum obtained by sending an encoded signal by using a method provided in this application, and a Doppler spectrum obtained by sending an encoded signal by using no method provided in this application (that is, a Doppler spectrum obtained when an encoded signal is sent in a conventional CDM manner). For ease of distinguishing and description, the curve in the Doppler spectrum obtained by sending the encoded signal by using the method provided in this application is denoted as a curve a, and the curve in the Doppler spectrum obtained by sending the encoded signal in the conventional CDM manner is denoted as a curve b below.

The Doppler spectrums shown in FIG. 8 are obtained through simulation assuming that only one target is detected. Specific parameters are as follows: T=2, a pulse signal is a chirp signal, Nc=256, and an interpolation coefficient $\eta$ =8.

It can be learned through observation that, in a region near a Doppler bin 1024, a level amplitude reaches a maximum value, and is a main lobe. The region is a first region, and 1024 is an example of $d_0$.

In regions near two sides of the main lobe, level amplitudes respectively corresponding to the curve a and the curve b are greatly different. As shown in the figure, in a range of Doppler bins 513 to 1024 and 1024 to 1535, a level amplitude of the curve a is approximately -30 dB, and a maximum level amplitude is approximately -25 dB; and a level amplitude of the curve b is around -20 dB, and a maximum level amplitude reaches approximately -13 dB. In other words, in a range of Doppler bins 513 to 1024 and 1024 to 1535, an amplitude of a side lobe of the curve a is lower than an amplitude of a side lobe of the curve b, and this part of region is a second region. 513 is an example of $d_1$, and 1535 is an example of $d_2$. In the second region, a peak sidelobe level (peak sidelobe level, PSL) of the curve a is -13.03 dB, and a PSL of the curve b is -15 dB. The PSL may be understood as Doppler dynamics, that is, Doppler dynamics of the curve a is greater than Doppler dynamics of the curve b, so that a possibility that a main lobe of a weak target is submerged by a side lobe of a strong target is reduced.

On two sides of the second region, that is, a range in which the Doppler bin is less than 513 and a range in which the Doppler bin is greater than 1535, a level amplitude of the curve a is slightly higher than a level amplitude of the curve b on the whole. This part of region is a third region. Due to energy conservation, if a level amplitude of a side lobe in the second region is lower than a level amplitude of a side lobe in the third region, the level amplitude of the side lobe in the second region is lower, and correspondingly, the level amplitude of the side lobe in the third region is higher.

Optionally, the second region includes one or more sub-regions, each sub-region corresponds to a parameter, and the parameter corresponding to each sub-region is a maximum peak value of a side lobe in the sub-region.

Due to the energy conservation, in a Doppler spectrum, if there is an expectation to control a level amplitude of a side lobe in a region to be extremely low, the region is not large. Therefore, the second region may be divided into a plurality of sub-regions, and different weights are applied to different sub-regions based on different degrees of interest, so that a maximum peak value of a side lobe in a sub-region is smaller than a maximum peak value of a side lobe in another sub-region. In this way, a difference in Doppler dynamics in the different sub-regions can be implemented, and Doppler dynamics in different regions satisfy different requirements. Therefore, it is beneficial to obtain more free control.

A maximum peak value of a side lobe in each sub-region may be denoted as a parameter, and each parameter may be determined from a spectrum of at least one Doppler bin in a corresponding sub-region. In other words, a maximum peak value determined from a spectrum of at least one Doppler bin in each sub-region is used as a parameter corresponding to the sub-region. A signal sending apparatus may control a peak value of the side lobe in each sub-region by controlling the parameter. It should be understood that this is described below with reference to a specific example, and details are not described herein.

It may be understood that the second region may include the one or more sub-regions. When the second region includes one sub-region, that is, the second region is not divided into a plurality of sub-regions, the second region corresponds to one parameter, and the parameter is a maximum peak value determined from a spectrum of a plurality of Doppler bins in the second region, that is, a maximum peak value of a side lobe in the second region.

It should be noted that, in the Doppler spectrum shown in FIG. 8, only the first region, the second region, and the third region are shown, and the sub-regions in the second region are not shown. However, it may be understood that the second region may be divided into more sub-regions with a parameter configuration. For example, the second region is divided into a sub-region 1 and a sub-region 2. The sub-region 1 is located on two sides of the first region, and the sub-region 2 is located on two sides of the sub-region 1. By analogy, details are not described herein again.

In conclusion, in embodiments of this application, in the Doppler spectrum corresponding to the determined T codeword sequences, the maximum peak value of the side lobe in the second region is less than the maximum peak value of the side lobe in the third region, that is, the second region may be used as an ROI, and a difference between the maximum peak value of the main lobe and the maximum peak value of the side lobe in the ROI is large, that is, Doppler dynamics are large. In this way, when a plurality of targets are detected, a side lobe of a strong target may not submerge a side lobe of a weak target, thereby reducing a missing detection probability, so that the radar can sense a surrounding environment more comprehensively and accurately, and safety is improved.

In addition, the second region is divided into one or more smaller sub-regions, the ROI may be further subdivided, different sub-regions correspond to different degrees of attention, and optimization is performed to different degrees, so that a maximum peak value of a side lobe in a sub-region is lower than a maximum peak value of a side lobe in another sub-region. Therefore, optimization degrees of different sub-regions may be adjusted based on a requirement, to implement more flexible control.

The foregoing T codeword sequences may be determined from a plurality of groups of codeword sequences that are generated randomly. To make the Doppler dynamics in the ROI as large as possible, a function may be predefined, and then the plurality of groups of codeword sequences are calculated and screened separately based on the preset function, to determine at least one group of better codeword sequences. For ease of distinguishing and description, a codeword sequence determined based on the preset function is denoted as a target codeword sequence below. It may be understood that the T codeword sequences are from a group of target codeword sequences.

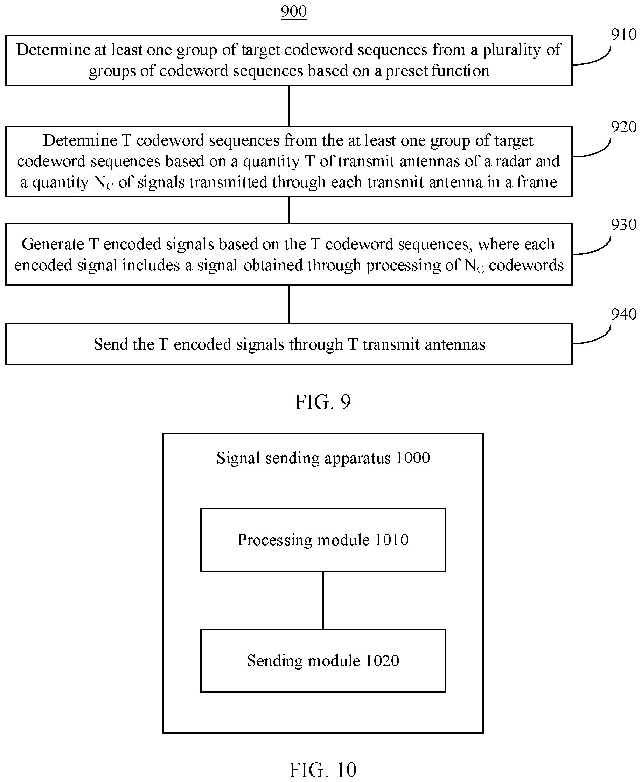

To better understand the method provided in embodiments of this application, the following provides more detailed descriptions with reference to FIG. 9.

FIG. 9 is another schematic flowchart of a signal sending method according to an embodiment of this application. The method 900 shown in FIG. 9 includes step 910 to step 940. The steps in FIG. 9 are described in detail below.

Step 910: Determine at least one group of target codeword sequences from a plurality of groups of codeword sequences based on a preset function.

The plurality of groups of codeword sequences for determining the at least one group of codeword sequences are different from each other. Herein, that the plurality of groups of codeword sequences are different from each other may mean that at least one codeword sequence in a plurality of codeword sequences in any two groups of the plurality of groups of codeword sequences is different. In other words, a plurality of codeword sequences in any two groups of codeword sequences are partially different or completely different. For example, it is assumed that each group of codeword sequences includes two codeword sequences, and any two groups of codeword sequences in the plurality of groups of codeword sequences may have the following possibilities: one group of codeword sequences includes a codeword sequence 1 and a codeword sequence 2, and the other group of codeword sequences includes the codeword sequence 1 and a codeword sequence 3; or one group of codeword sequences includes a codeword sequence 1 and a codeword sequence 2, and the other group of codeword sequences includes a codeword sequence 3 and a codeword sequence 4. The codeword sequences 1, 2, 3, and 4 are for distinguishing between different codeword sequences.

A target codeword sequence is determined at a granularity of a group. A quantity of codeword sequences included in each group of target codeword sequences is the same as or greater than a quantity of transmit antennas. This is not limited in this application.

The plurality of groups of codeword sequences may be randomly generated by a signal sending apparatus. For example, at least one group of target codeword sequences may be determined from a plurality of groups of codeword sequences that are randomly generated at one time, or at least one group of target codeword sequences may be determined from a plurality of groups of codeword sequences that are randomly generated at a plurality of times. This is not limited in this application.

The preset function may be used to determine the at least one group of target codeword sequences from the plurality of groups of codeword sequences, so that the determined target codeword sequences satisfy a requirement as much as possible. Therefore, the preset function may vary based on different requirements.

The following shows several examples of the preset function with reference to different requirements.

It is assumed that a current requirement is to detect and measure a weak target. In this case, a maximum peak value of a side lobe of a strong target may be considered to be reduced, so that Doppler dynamics are as large as possible. Therefore, the preset function may be designed, so that the maximum peak value corresponding to the side lobe is as small as possible, thereby reducing a missing detection probability.

For example, a second region in a Doppler spectrum is not divided into a plurality of sub-regions, that is, includes only one sub-region. The preset function may be that a maximum peak value corresponding to a side lobe in the second region in the Doppler spectrum is $f_1$.

For another example, a second region in a Doppler spectrum is divided into a plurality of sub-regions, and the preset function may alternatively be weighting of maximum peak values $f_k$ corresponding to side lobes in the plurality of sub-regions in the second region in the Doppler spectrum, for example,

$$\sum_{k=1}^{K} \alpha_k f_k$$

, where K represents a quantity of sub-regions in the second region, K is an integer greater than 1, k may be an integer value obtained by traversing from 1 to K, $\alpha_k$ represents a weighting coefficient corresponding to a $k^{th}$ sub-region, and $f_k$ represents a maximum peak value of a side lobe in the $k^{th}$ sub-region.

It should be noted that, due to energy conservation, in a Doppler spectrum, if there is an expectation to control a level amplitude of a side lobe in a region to be extremely low, the region is not large. Therefore, the second region may be divided into the plurality of sub-regions, and a different weight is applied to each sub-region. In this way, a difference in Doppler dynamics between different sub-regions is implemented, and the Doppler dynamics of the different sub-regions can satisfy different requirements. Therefore, it is beneficial to obtain more free control.

Still, it is assumed that a current requirement is to detect and measure a target, that is, detection and measurement on a strong target and a weak target are included. In this case, a degree of cross-correlation between encoded signals sent through T transmit antennas may be further combined based on the introduction of the maximum peak value corresponding to the side lobe.

For example, the preset function may be a weighting of a maximum peak value corresponding to a side lobe in at least one region of the Doppler spectrum and a degree of cross-correlation, for example,

$$\beta g + \sum_{k=1}^{K} \alpha_k f_k$$

, where g represents the degree of cross-correlation between the encoded signals sent through the T transmit antennas, and may be referred to as a cross-correlation coefficient, and $\beta$ represents a weight of the degree of cross-correlation. It may be understood that a lower degree of cross-correlation indicates smaller interference to a peak value of a main lobe and a more accurate measurement result. Therefore, through control on the degree of cross-correlation, it is beneficial to accurately measure the strong target.

Optionally, $\beta=1$. That is, a high weight is applied to the degree of cross-correlation, so that the detection and the measurement on the strong target are more accurate.

It may be understood that, for each time of signal transmission, there are T encoded signals sent through the T transmit antennas, that is, each transmit antenna sends one encoded signal. A degree of cross-correlation between the T encoded signals depends on a degree of cross-correlation between T codeword sequences for generating the T encoded signals. In other words, the degree of cross-correlation between the T encoded signals sent through the T transmit antennas may be controlled by controlling the degree of cross-correlation between the T codeword sequences.

It should be understood that, in the plurality of preset functions enumerated above, values of the weights may be predefined, for example, set based on an empirical value, or determined based on historical data statistics. In addition, the values of the weights may be the same or may be different. This is not limited in this application.

In this embodiment of this application, for ease of distinguishing and description, a parameter $f_i$ used to control a maximum peak value of a side lobe is denoted as a first parameter, and a parameter g used to control a degree of correlation is denoted as a second parameter. Therefore, the foregoing preset function may include at least one first parameter, or may include at least one first parameter and a second parameter.

The first parameter $f_k$ may be determined based on a maximum peak value in each region k in the Doppler spectrum, and details are not described herein again. The second parameter g may be determined in a manner of covariance between codeword sequences in each group of codeword sequences. An example of determining the second parameter g is shown below.

It is assumed that a quantity of transmit antennas is 2. In this case, each group of codeword sequences matching the quantity of transmit antennas includes two codeword sequences, for example, denoted as vectors $s_1$ and $s_2$. A covariance matrix R of the vectors $s_1$ and $s_2$ is calculated, and then a maximum norm of $R-I \times N_C$ is calculated. The maximum norm may be used as a second parameter g indicating a degree of cross-correlation between the two codeword sequences. I is an identity matrix. It may be understood that a dimension of I should be the same as that of R.

When the quantity of transmit antennas is greater than 2, a second parameter g may also be determined based on the foregoing method. For example, for cross-correlation between a plurality of codeword sequences included in each group of codeword sequences, a maximum norm between every two codeword sequences is calculated by calculating a covariance matrix between the every two codeword sequences, so that a maximum norm corresponding to pairwise codeword sequences in each group of codeword sequences may be obtained. It may be understood that, corresponding to each group of codeword sequences, a plurality of maximum norms may be obtained, and the second parameter g may be a maximum value in the plurality of maximum norms.

It should be understood that the method provided above for determining the second parameter g is merely an example. This application does not exclude a possibility of determining, in another manner, the second parameter g indicating a degree of cross-correlation between the plurality of codeword sequences. For brevity, details are not described herein.

As described above, for a same preset function, a plurality of possible conditions may be designed to determine the at least one group of target codeword sequences from the plurality of groups of codeword sequences. The following shows two possible designs.

In a first possible design, any one group of the at least one group of target codeword sequences satisfies that a function value obtained based on the preset function is less than a first preset threshold.

As described above, the signal sending apparatus may randomly generate the plurality of groups of codeword sequences that are different from each other. A plurality of encoded signals generated based on the plurality of groups of codeword sequences are also different from each other. After each group of codeword sequences is used to generate an encoded signal, an echo signal may be obtained after the obtained encoded signal is sent and reflected, so that a Doppler spectrum corresponding to each group of codeword sequences may be obtained. Different codeword sequences may be used to obtain different Doppler spectrums, peak values in second regions in different Doppler spectrums are also different from each other, and parameters corresponding to sub-regions in the second regions in the different Doppler spectrums are also different. A function value corresponding to each group of codeword sequences may be separately calculated based on the preset function, to obtain a plurality of function values that are in a one-to-one correspondence with the plurality of groups of codeword sequences. If a function value of a codeword sequence is less than the first preset threshold, the codeword sequence may be determined as the target codeword sequence. In this way, the at least one group of target codeword sequences may be determined from the plurality of groups of codeword sequences.

It should be noted that, if a preset function value less than the first preset threshold is not determined from the plurality of preset function values, the foregoing operations of generating a plurality of groups of codeword sequences, generating a plurality of encoded signals, and obtaining a Doppler spectrum based on an echo signal may be further repeatedly performed until the preset function value less than the first preset threshold may be determined from the plurality of groups of codeword sequences that are randomly generated. In this way, the at least one group of target codeword sequences may be obtained.

In a second possible design, the at least one group of target codeword sequences is obtained by determining at least one group of codeword sequences from the plurality of groups of codeword sequences according to a preset rule, and performing iterative update on the at least one determined group of codeword sequences until a quantity of iterative update times reaches a second preset threshold.

For example, the signal sending apparatus may first determine at least one group of codeword sequences from the plurality of groups of codeword sequences according to a first preset rule, and continuously perform iterative update on the at least one group of codeword sequences according to a second preset rule. When a quantity of iterative update times reaches the second preset threshold, iteration is stopped to obtain the at least one group of target codeword sequences.

The first preset rule is similar to the preset condition mentioned in the foregoing first possible design, that is, a function value of each group of codeword sequences may be calculated based on a preset function, to determine the at least one group of codeword sequences from the plurality of groups of codeword sequences based on the function value. The at least one group of codeword sequences may be understood as candidate target codeword sequences.

For example, after randomly generating a plurality of groups of codeword sequences that are different from each other, the signal sending apparatus may separately calculate, based on a preconfigured preset function, preset function values of the plurality of groups of codeword sequences, to obtain a plurality of preset function values that are in a one-to-one correspondence with the plurality of groups of codeword sequences, and use, as a candidate target codeword sequence, a codeword sequence corresponding to a preset function value that is in the plurality of preset function values respectively corresponding to the plurality of groups of codeword sequences and that is less than the first preset threshold; or sort, in ascending order, the plurality of preset function values respectively corresponding to the group of codeword sequences, and use, as a candidate target codeword sequence, codeword sequences corresponding to P (where P is a positive integer, and P is a predefined value) preset function values that are sorted in the front; or the like. This application includes but is not limited thereto.

At least one group of candidate codeword sequences may be obtained by repeating the foregoing steps. The at least one group of candidate codeword sequences obtained newly may be used to perform iterative update on at least one group of candidate codeword sequences obtained previously. The iterative update may alternatively be implemented based on the second preset rule. Alternatively, the second preset rule may be a rule that is based on the preset function.

For example, an iterative update process is as follows: Assuming that a quantity of groups of target codeword sequences is predefined as Q (where Q is a positive integer), preset function values respectively corresponding to at least one group of candidate codeword sequences obtained previously and preset function values respectively corresponding to at least one group of codeword sequences obtained subsequently may be sorted in ascending order, Q groups of codeword sequences corresponding to Q preset function values that are sorted in the front are reserved, and others are excluded, to obtain Q groups of candidate target codeword sequences. In this way, one time of iterative update is completed.

The foregoing iterative update operation is repeatedly performed until a quantity of iterative update times reaches the second preset threshold, and the update may be stopped. In this way, the Q groups of codeword sequences may be obtained and used as the target codeword sequences.

It should be understood that the foregoing specific enumerated process of the iterative update is merely an example. A specific implementation of the iterative update, the quantity Q of groups of target codeword sequences that needs to be obtained for the iterative update, and the quantity of iterative update times (that is, the second preset threshold) are not limited in this application.

The at least one group of target codeword sequences may be determined when there is a target detection or measurement requirement, or may be candidate target codeword sequences determined in advance. This is not limited in this application. The target codeword sequence determined at any time may be determined based on the foregoing preset function.

In a possible implementation, the signal sending apparatus may randomly generate a plurality of groups of codeword sequences based on a current target detection or measurement requirement, a quantity T of transmit antennas of a radar, and a quantity Nc of pulse signals sent through each transmit antenna in a frame, and determine the at least one group of target codeword sequences from the plurality of groups of codeword sequences based on the preset function. The plurality of groups of codeword sequences may be generated at one time, or may be generated at a plurality of times. This is not limited in this application.

In another possible implementation, the signal sending apparatus may determine candidate target codeword sequences in advance from the plurality of groups of codeword sequences. To be used with different radars and different measurement requirements, the candidate target codeword sequences may correspond to a plurality of different parameter combinations. Therefore, the candidate target codeword sequences include a plurality of groups of target codeword sequences.

A parameter combination may specifically include a quantity of transmit antennas, a quantity of pulse signals transmitted through each transmit antenna in a frame, and at least one quantity of Doppler bins. A quantity of quantities of Doppler bins corresponds to a quantity of regions of interest in a Doppler spectrum. For example, the parameter combination may include $\{t, n_c, n_{r_1}, n_{r_2}, ..., n_{r_K}\}$. Herein, for ease of distinguishing from the quantity Nc of pulse signals transmitted through each transmit antenna of the radar in the frame and the quantity $N_R$ of Doppler bins in each sub-region of the second region described above, quantities in the parameter combination are represented by lower-case $n_c$ and $n_r$. It may be understood that, based on different requirements, a quantity of sub-regions into which the second region is divided may be different. In addition, for different radars, values of $n_c$, $n_{r_1}$, $n_{r_2}$, ..., and $n_{r_K}$ may be different.

The plurality of parameter combinations are different from each other. Specifically, in the plurality of parameter combinations, there may be two or more parameter combinations with different parameter items. In other words, for different parameter combinations, values of K may be different. Even if parameter items are the same, values of at least one parameter in different parameter combinations are different.

Corresponding to each parameter combination, the signal sending apparatus may determine at least one group of target codeword sequences in advance, for example, based on the manner provided in the previous implementation. In this way, a plurality of groups of target codeword sequences corresponding to different parameter combinations may be obtained.

It should be understood that for a specific method for determining the at least one group of target codeword sequences by the signal sending apparatus from the plurality of groups of codeword sequences, refer to the foregoing related descriptions of the preset function. Details are not described herein again.

The at least one group of target codeword sequences determined from the plurality of groups of codeword sequences satisfies that a Doppler spectrum corresponding to each group of target codeword sequences includes the first region, the second region, and the third region described above, and the maximum peak value of the side lobe in the second region is less than the maximum peak value of the side lobe in the third region. In other words, Doppler dynamics in the second region are large, so that a side lobe of a strong target does not submerge a main lobe of a weak target, to avoid missing detection and help obtain an accurate measurement result. In addition, the second region is divided into one or more sub-regions, so that more flexible control can be implemented.

Step 920: Determine T codeword sequences from the at least one group of codeword sequences based on the quantity T of transmit antennas of the radar and the quantity Nc of signals transmitted through each transmit antenna in the frame.

It should be understood that the T codeword sequences are codeword sequences for transmission. When there is a target detection and measurement requirement, the signal sending apparatus may determine the T codeword sequences for transmission from the at least one group of target codeword sequences.

The T codeword sequences for transmission may be obtained from a group of target codeword sequences. For ease of distinguishing and description, the group of target codeword sequences is denoted as a first target codeword sequence group herein. It may be understood that the first target codeword sequence is determined from at least one group of target codeword sequences that match parameters {T, Nc}. A target codeword sequence that matches the parameters {T, Nc} satisfies that L codeword sequences are included, where L≥T, and L is an integer; and each codeword sequence includes Nc codewords.

The T codeword sequences for transmission may be randomly selected from the at least one group of target codeword sequences, or may be determined from the at least one group of codeword sequences based on the preset function. This is not limited in this application.

For example, a function value of each group of target codeword sequences that match the parameters {T, Nc} may be calculated based on the preset function. The signal sending apparatus may determine a group with a minimum function value as the first target codeword sequence group, to obtain the T codeword sequences. If L=T, the first target codeword sequence group may be directly determined as the T codeword sequences for transmission. If L>T, any T codeword sequences in the first target codeword sequence group may be used as the T codeword sequences, or any T codeword sequences may be further combined based on the foregoing preset function, to obtain corresponding function values, and a group with a minimum function value is determined as the T codeword sequences for transmission.

It should be understood that the foregoing example method for determining the T codeword sequences is merely an example, and should not constitute any limitation on this application.

It should be further understood that step 910 and step 920 are a possible implementation of step 710 in the method 700.

As described above, a PRI of the radar may be adjusted based on a required speed measurement range, and a range of the second region and a quantity of Doppler bins included in the second region may also vary with an ROI. Therefore, when the required speed measurement range is fixed, the PRI may be determined, to determine the quantity of Doppler bins in the second region.

Optionally, the method further includes: determining, based on the quantity Nc of signals transmitted through each transmit antenna of the radar in the frame, the required speed measurement range, and the PRI, the quantity of Doppler bins corresponding to the second region.

The quantity of Doppler bins corresponding to the second region may include a quantity of Doppler bins corresponding to each sub-region in the second region.

For example, the second region includes only one sub-region, that is, when the second region is not further divided, the quantity of Doppler bins in the second region may be denoted as $N_R$. The quantity $N_R$ of Doppler bins in the second region, the quantity Nc of pulse signals transmitted through each transmit antenna in the frame, the required speed measurement range V, and a speed measurement range $V_{PRI}$ corresponding to the PRI satisfy the following relationship:

$$\frac{N_R}{\eta \cdot N_C} = \frac{V}{V_{PRI}}$$

$N_R$ indicates the quantity of Doppler bins in the second region, $\eta$ is an interpolation coefficient, and $\eta$ is a positive number. It may be understood that when $\eta$ is 1, the foregoing relational expression may be converted into:

$$\frac{N_R}{N_C} = \frac{V}{V_{PRI}}$$

It may be understood that, the interpolation coefficient is introduced, and oversampling may be performed based on existing Nc Doppler bins in the Doppler spectrum, so that peak values of more Doppler bins may be observed in the Doppler spectrum. Therefore, measurement precision can be improved.

Step 930: Generate T encoded signals based on the T codeword sequences, where each encoded signal includes a signal obtained through processing of $N_C$ codewords.

After determining the T codeword sequences, the signal sending apparatus may separately use the T codeword sequences to process a same pulse signal to obtain the T encoded signals. A specific process of obtaining the T encoded signals through processing of the T codeword sequences has been described above with reference to the correspondence between the T codeword sequences and the T encoded signals, and details are not described herein again.

Step 940: Send the T encoded signals through the T transmit antennas.

As described above, the T encoded signals generated by the signal sending apparatus are in a one-to-one correspondence with the T transmit antennas, and each encoded signal may be sent through one transmit antenna.

Because each transmit antenna corresponds to a different encoded signal, the T transmit antennas may send the encoded signals in a CDM manner. For a specific implementation of sending signals through the T transmit antennas in the CDM manner, refer to a conventional technology. Details are not described herein.

It should be understood that step 930 and step 940 are a possible implementation of step 720 in the method 700.

Based on the foregoing method, codeword sequences are screened based on the predefined preset function, the Doppler spectrum corresponding to each group of codeword sequences is divided into a plurality of regions, and the codeword sequences are screened based on the maximum peak value of the side lobe in the ROI (that is, the second region), so that a maximum peak value of a side lobe in the ROI in a Doppler spectrum corresponding to a selected codeword sequence is as small as possible, and Doppler dynamics are as large as possible. In this way, the side lobe of the strong target does not submerge the main lobe of the weak target, thereby helping reduce the missing detection probability. In addition, the second region is divided into one or more smaller sub-regions, the ROI may be further subdivided, different sub-regions correspond to different degrees of attention, and optimization is performed to different degrees, so that a maximum peak value of a side lobe in a sub-region is lower than a maximum peak value of a side lobe in another sub-region. Therefore, optimization degrees of different sub-regions may be adjusted based on a requirement, to implement more flexible control. In addition, the main lobe is controlled with reference to the cross-correlation coefficient, to reduce interference caused by cross-correlation between a plurality of transmit antennas to the main lobe. In conclusion, according to the method provided in this embodiment of this application, the codeword sequence is optimized from different perspectives, so that the radar can sense a surrounding environment more comprehensively and accurately, and safety can be greatly improved.

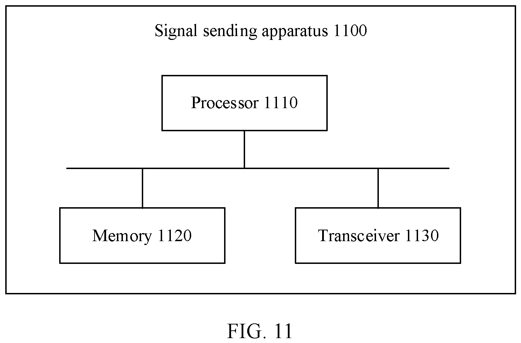

The foregoing describes in detail the methods provided in embodiments of this application with reference to FIG. 2 to FIG. 9. The following describes in detail apparatuses provided in embodiments of this application with reference to FIG. 10 and FIG. 11.

FIG. 10 is a schematic block diagram of a signal sending apparatus according to an embodiment of this application. As shown in FIG. 10, the signal sending apparatus 1000 may include a processing module 1010 and a sending module 1020. The modules in the apparatus 1000 may be configured to implement a corresponding procedure performed by the signal sending apparatus in the method 700 shown in FIG. 7 or the method 900 shown in FIG. 9.

Specifically, the processing module 1010 may be configured to determine, based on a quantity T of transmit antennas of a radar and a quantity Nc of signals transmitted through each transmit antenna in a frame, T codeword sequences that are in a one-to-one correspondence with T transmit antennas, where each of the T codeword sequences includes Nc codewords, each codeword sequence is used to process Nc signals of a transmit antenna, T>1, Nc≥1, both T and Nc are integers, a Doppler spectrum corresponding to the T codeword sequences includes a first region corresponding to a main lobe, and a second region and a third region that correspond to side lobes, and a maximum peak value of the side lobe in the second region is less than a maximum peak value of the side lobe in the third region. The sending module 1020 may be configured to send, through the T transmit antennas, signals processed by using the T codeword sequences.

Optionally, the Doppler spectrum is obtained by performing non-coherent or coherent integration on signals that are sent through the T transmit antennas and that are obtained through decoding, Doppler bins corresponding to the first region are $d_0$, Doppler bins corresponding to the second region include a plurality of Doppler bins falling within a range of $[d_1, d_0)$ and $(d_0, d_2]$, and Doppler bins corresponding to the third region include a plurality of Doppler bins falling within a range of $(-\infty, d_1)$ and $(d_2, +\infty)$, where $d_1 < d_0 < d_2$.

Optionally, the second region includes one or more sub-regions, each sub-region corresponds to a parameter, and the parameter corresponding to each sub-region is a maximum peak value of a side lobe in the sub-region.

Optionally, each sub-region in the second region includes at least one Doppler bin, and the parameter corresponding to each sub-region is determined from a spectrum of at least one Doppler bin in the corresponding sub-region.

Optionally, the T codeword sequences are from one group of at least one group of target codeword sequences, and any one group of the at least one group of target codeword sequences includes the first region, the second region, and the third region.

Optionally, the at least one group of target codeword sequences is determined from a plurality of groups of codeword sequences based on a preset function, and the preset function is related to one or more parameters respectively corresponding to the one or more sub-regions in the second region.

Optionally, the preset function is weighting of the one or more parameters.

Optionally, the preset function is further related to a degree of cross-correlation between the signals transmitted through the T transmit antennas.

Optionally, the preset function is the degree of cross-correlation between the signals transmitted through the T transmit antennas and the weighting of the one or more parameters.

Optionally, the any one group of the at least one group of target codeword sequences satisfies that a function value obtained based on the preset function is less than a first preset threshold.

Optionally, the at least one group of target codeword sequences is obtained by determining at least one group of codeword sequences from the plurality of groups of codeword sequences according to a preset rule, and performing iterative update on the at least one group of codeword sequences until a quantity of iterative update times reaches a second preset threshold.

Optionally, the processing module 1010 may be further configured to obtain a plurality of groups of candidate target codeword sequences, where each group of the plurality of groups of target codeword sequences corresponds to one of a plurality of parameter combinations, each parameter combination includes a quantity of transmit antennas, a quantity of signals transmitted through each transmit antenna in a frame, and a quantity of Doppler bins corresponding to the second region, and at least two parameters in any two of the plurality of parameter combinations have different values. The processing module 1010 may be specifically configured to determine one group of target codeword sequences from the plurality of groups of target codeword sequences based on the quantity T of transmit antennas of the radar, the quantity Nc of signals transmitted through each transmit antenna in the frame, the quantity of Doppler bins corresponding to the second region, and a correspondence between the plurality of groups of target codeword sequences and the plurality of parameter combinations, where the determined group of target codeword sequences includes the T codeword sequences that are in the one-to-one correspondence with the T transmit antennas.

Optionally, the processing module 1010 may be specifically configured to: obtain the plurality of groups of codeword sequences based on the quantity T of transmit antennas of the radar and the quantity Nc of signals transmitted through each transmit antenna in the frame, where each group of codeword sequences includes T codeword sequences, and each codeword sequence includes Nc codewords; determine a function value of each group of the plurality of groups of codeword sequences based on the preset function; and determine at least one group of target codeword sequences from the plurality of groups of codeword sequences based on the function value of each group of the plurality of groups of codeword sequences; and determine one group of target codeword sequences from the at least one group of target codeword sequences, where the T codeword sequences that are in the one-to-one correspondence with the T transmit antennas are from the determined group of target codeword sequences.

Optionally, the processing module 1010 may be further configured to determine, based on the quantity Nc of signals transmitted through each transmit antenna of the radar in the frame, a required speed measurement range, and a pulse repetition interval PRI, a quantity of Doppler bins corresponding to the second region.

Optionally, the Nc signals are Nc pulse signals, and the signals processed by using the T codeword sequences are T encoded signals; and the processing module 1010 may be further configured to process Nc pulse signals of a transmit antenna based on each of the T codeword sequences, to obtain an encoded signal corresponding to the transmit antenna.

It should be understood that, in this embodiment of this application, division into modules is used as an example, and is merely logical function division, and there may be another division manner during actual implementation. In addition, functional modules in embodiments of this application may be integrated into one processor, or each of the modules may exist alone physically, or two or more modules are integrated into one module. The integrated module may be implemented in a form of hardware, or may be implemented in a form of a software functional module.

FIG. 11 is another schematic block diagram of a signal sending apparatus according to an embodiment of this application. The signal sending apparatus 1100 may be configured to implement a function of the signal sending apparatus in the foregoing method. The signal sending apparatus 1100 may be a radar, or may be a component configured in the radar, for example, a chip system. In this embodiment of this application, the chip system may include a chip, or may include a chip and another discrete device.

As shown in FIG. 11, the apparatus 1100 may include at least one processor 1110, configured to implement a function of the signal sending apparatus in the method provided in embodiments of this application.

When the apparatus 1100 is configured to implement the function of the signal sending apparatus in the method provided in embodiments of this application, the processor 1110 may be configured to determine, based on a quantity T of transmit antennas of a radar and a quantity Nc of signals transmitted through each transmit antenna in a frame, T codeword sequences that are in a one-to-one correspondence with T transmit antennas, where each of the T codeword sequences includes Nc codewords, each codeword sequence is used to process Nc signals of a transmit antenna, T>1, Nc≥1, both T and Nc are integers, a Doppler spectrum corresponding to the T codeword sequences includes a first region corresponding to a main lobe, and a second region and a third region that correspond to side lobes, and a maximum peak value of the side lobe in the second region is less than a maximum peak value of the side lobe in the third region; and may be further configured to control the transceiver 1130 to send, through the T transmit antennas, signals processed by using the T codeword sequences.

The apparatus 1100 may further include at least one memory 1120, configured to store program instructions and/or data. The memory 1120 is coupled to the processor 1110. The coupling in this embodiment of this application is indirect coupling or a communication connection between apparatuses, units, or modules for information exchange between the apparatuses, the units, or the modules, and may be in electrical, mechanical, or other forms. The processor 1110 may cooperate with the memory 1120. The processor 1110 may execute the program instructions stored in the memory 1120. At least one of the at least one memory may be included in the processor.

The apparatus 1100 further includes a transceiver 1130, configured to communicate with another device by using a transmission medium, so that the apparatus 1100 can communicate with the another device. The processor 1110 may receive and send data and/or information through the transceiver 1130, and is configured to implement the method performed by the signal sending apparatus in the embodiment corresponding to FIG. 7 or FIG. 9.

A specific connection medium between the processor 1110, the memory 1120, and the transceiver 1130 is not limited in this embodiment of this application. In this embodiment of this application, in FIG. 11, the processor 1110, the memory 1120, and the transceiver 1130 are connected by using a bus. The bus is represented by using a thick line in FIG. 11, and a connection manner between other components is merely described as an example, and is not limited thereto. Buses may be classified into an address bus, a data bus, a control bus, and the like. For ease of representation, only one thick line is for representing the bus in FIG. 11, but this does not mean that there is only one bus or only one type of bus.

It should be understood that, the processor in embodiments of this application may be an integrated circuit chip, and has a signal processing capability. In an implementation process, the steps in the foregoing method embodiment may be completed by an integrated logic circuit in a form of hardware or instructions in a form of software in the processor. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

This application further provides a radar. The radar includes a memory and a processor. The memory is configured to store program code. The processor is configured to invoke the program code to implement the method in the embodiment shown in FIG. 7 or FIG. 9.

This application further provides a terminal. The terminal includes the foregoing radar. Optionally, the terminal is a vehicle.

This application further provides a computer program product. The computer program product includes a computer program (which may also be referred to as code or instructions). When the computer program is run, a computer is enabled to perform the method in the embodiment shown in FIG. 7 or FIG. 9.

This application further provides a computer-readable storage medium. The computer-readable storage medium stores a computer program (which may also be referred to as code or instructions). When the computer program is run, a computer is enabled to perform the method in the embodiment shown in FIG. 7 or FIG. 9.

Terms such as "unit" and "module" used in this specification may indicate computer-related entities, hardware, firmware, combinations of hardware and software, software, or software being executed.

A person of ordinary skill in the art may be aware that, in combination with illustrative logical blocks (illustrative logical blocks) described in embodiments disclosed in this specification and steps (steps), this application can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application. In the several embodiments provided in this application, it should be understood that the disclosed apparatuses, devices, and methods may be implemented in other manners. For example, the described apparatus embodiments are merely examples. For example, division into the units is merely logical function division, and there may be another division manner during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by software, hardware, firmware, or any combination thereof. When software is used to implement embodiments, all or some of embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal sending method, comprising:

   determining, based on a quantity T of transmit antennas of a radar and a quantity Nc of signals transmitted through each transmit antenna in a frame, T codeword sequences that are in a one-to-one correspondence with T transmit antennas, wherein each of the T codeword sequences comprises Nc codewords, each codeword sequence is used to process Nc signals of a transmit antenna, $T>1$, $Nc \geq 1$, both T and Nc are integers, a Doppler spectrum corresponding to the T codeword sequences comprises a first region corresponding to a main lobe, and a second region and a third region that correspond to side lobes, and a maximum peak value of the side lobe in the second region is less than a maximum peak value of the side lobe in the third region; and
   sending, through the T transmit antennas, signals processed by using the T codeword sequences.

2. The method according to claim 1, wherein the Doppler spectrum is obtained by performing non-coherent or coherent integration on signals that are sent through the T transmit antennas and that are obtained through decoding, Doppler bins corresponding to the first region are $d_0$, Doppler bins corresponding to the second region comprise a plurality of Doppler bins falling within a range of $[d_1, d_0)$ and $(d_0, d_2]$, and Doppler bins corresponding to the third region comprise a plurality of Doppler bins falling within a range of $(-\infty, d_1)$ and $(d_2, +\infty)$, wherein $d_1<d_0<d_2$.

3. The method according to claim 2, wherein the second region comprises one or more sub-regions, each sub-region corresponds to a parameter, and the parameter corresponding to each sub-region is a maximum peak value of a side lobe in the sub-region.

4. The method according to claim 3, wherein each sub-region in the second region comprises at least one Doppler bin, and the parameter corresponding to each sub-region is determined from a spectrum of at least one Doppler bin in the corresponding sub-region.

5. The method according to any one of claims 1 to 4, wherein the T codeword sequences are from one group of at least one group of target codeword sequences, and any one group of the at least one group of target codeword sequences comprises the first region, the second region, and the third region.

6. The method according to claim 5, wherein the at least one group of target codeword sequences is determined from a plurality of groups of codeword sequences based on a preset function, and the preset function is related to one or more parameters respectively corresponding to the one or more sub-regions in the second region.

7. The method according to claim 6, wherein the preset function is weighting of the one or more parameters.

8. The method according to claim 6 or 7, wherein the preset function is further related to a degree of cross-correlation between the signals transmitted through the T transmit antennas.

9. The method according to claim 8, wherein the preset function is the degree of cross-correlation between the signals transmitted through the T transmit antennas and the weighting of the one or more parameters.

10. The method according to any one of claims 6 to 9, wherein the any one group of the at least one group of target codeword sequences satisfies that a function value obtained based on the preset function is less than a first preset threshold.

11. The method according to any one of claims 6 to 9, wherein the at least one group of target codeword sequences is obtained by determining at least one group of codeword sequences from the plurality of groups of codeword sequences according to a preset rule, and performing iterative update on the at least one group of codeword sequences until a quantity of iterative update times reaches a second preset threshold.

12. The method according to any one of claims 6 to 11, wherein the method further comprises:

obtaining a plurality of groups of candidate target codeword sequences, wherein each group of the plurality of groups of target codeword sequences corresponds to one of a plurality of parameter combinations, each parameter combination comprises a quantity of transmit antennas, a quantity of signals transmitted through each transmit antenna in a frame, and a quantity of Doppler bins corresponding to the second region, and at least two parameters in any two of the plurality of parameter combinations have different values; and

the determining, based on a quantity T of transmit antennas of a radar and a quantity Nc of signals transmitted through each transmit antenna in a frame, T codeword sequences that are in a one-to-one correspondence with T transmit antennas comprises:

determining one group of target codeword sequences from the plurality of groups of target codeword sequences based on the quantity T of transmit antennas of the radar, the quantity Nc of signals transmitted through each transmit antenna in the frame, the quantity of Doppler bins corresponding to the second region, and a correspondence between the plurality of groups of target codeword sequences and the plurality of parameter combinations, wherein the determined group of target codeword sequences comprises the T codeword sequences that are in the one-to-one correspondence with the T transmit antennas.

13. The method according to any one of claims 6 to 11, wherein the determining, based on a quantity T of transmit antennas of a radar and a quantity Nc of signals transmitted through each transmit antenna in a frame, T codeword sequences that are in a one-to-one correspondence with T transmit antennas comprises:

obtaining the plurality of groups of codeword sequences based on the quantity T of transmit antennas of the radar and the quantity Nc of signals transmitted through each transmit antenna in the frame, wherein each group of codeword sequences comprises T codeword sequences, and each codeword sequence comprises Nc codewords; determining a function value of each group of the plurality of groups of codeword sequences based on the preset function; determining at least one group of target codeword sequences from the plurality of groups of codeword sequences based on the function value of each group of the plurality of groups of codeword sequences; and determining one group of target codeword sequences from the at least one group of target codeword sequences, wherein the T codeword sequences that are in the one-to-one correspondence with the T transmit antennas are from the determined group of target codeword sequences.

14. The method according to claim 13, wherein the method further comprises:
determining, based on the quantity Nc of signals transmitted through each transmit antenna of the radar in the frame, a required speed measurement range, and a pulse repetition interval PRI, a quantity of Doppler bins corresponding to the second region.

15. The method according to any one of claims 1 to 14, wherein the Nc signals are Nc pulse signals, and the signals processed by using the T codeword sequences are T encoded signals; and
before the sending, through the T transmit antennas, signals processed by using the T codeword sequences, the method further comprises:
processing Nc pulse signals of a transmit antenna based on each of the T codeword sequences, to obtain an encoded signal corresponding to the transmit antenna.

16. A signal sending apparatus, comprising a module configured to perform the method according to any one of claims 1 to 15.

17. A signal sending apparatus, comprising a processor, wherein the processor is configured to invoke program code to implement the method according to any one of claims 1 to 15.

18. A radar, comprising a memory and a processor, wherein

the memory is configured to store program code; and
the processor is configured to invoke the program code to implement the method according to any one of claims 1 to 15.

19. A terminal, comprising the radar according to claim 18.

20. The terminal according to claim 19, wherein the terminal is a vehicle.

21. A computer-readable storage medium, wherein the computer-readable storage medium stores a computer program, and when the computer program is executed by a processor, an electronic device is enabled to perform the method according to any one of claims 1 to 15.

22. A computer program product, comprising a computer program, wherein when the computer program is run, a computer is enabled to perform the method according to any one of claims 1 to 15.

Radar 10

101

103

Processor

102

Transmitted signal

Echo signal

Noise signal

Interference signal

20

FIG. 1

FIG. 2

Transmit antenna

Phase shifter

Phase shifter

Phase shifter

Linear frequency
modulation signal

FIG. 3

(a)

(b)

FIG. 4

Receive antenna

Range
processing
(FFT)

$T_1$ matched filtering

Speed processing
(FFT)

$T_2$ matched filtering

Speed processing
(FFT)

$T_M$ matched
filtering

Speed processing
(FFT)

FIG. 5

FIG. 6

700

| Determine, based on a quantity T of transmit antennas of a radar and a quantity $N_C$ of signals transmitted through each transmit antenna in a frame, T codeword sequences that are in a one-to-one correspondence with T transmit antennas | 710 |
|---|---|
| Send, through the T transmit antennas, signals processed by using the T codeword sequences | 720 |

FIG. 7

FIG. 8

EP 4 465 077 A1

900

| Determine at least one group of target codeword sequences from a plurality of groups of codeword sequences based on a preset function | 910 |

| Determine T codeword sequences from the at least one group of target codeword sequences based on a quantity T of transmit antennas of a radar and a quantity $N_C$ of signals transmitted through each transmit antenna in a frame | 920 |

| Generate T encoded signals based on the T codeword sequences, where each encoded signal includes a signal obtained through processing of $N_C$ codewords | 930 |

| Send the T encoded signals through T transmit antennas | 940 |

FIG. 9

Signal sending apparatus 1000

Processing module 1010

Sending module 1020

FIG. 10

Signal sending apparatus 1100

Processor 1110

Memory 1120

Transceiver 1130

FIG. 11

<div align="center">

**INTERNATIONAL SEARCH REPORT**

</div>

| International application No. |
| --- |
| **PCT/CN2022/076734** |

**A.    CLASSIFICATION OF SUBJECT MATTER**

G01S 7/41(2006.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 强目标, 弱目标, 峰值, 大于, 小于, 感兴趣区域, ROI, 主瓣, 旁瓣, 区域, 第二, 码字序列, 码字, 雷达, 天线, strong target, weak target, peak, greater, smaller, region of interest, main lobe, side lobe, region, second, code word sequence, code word, radar, antenna

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 104011558 A (HRL LABORATORIES, LLC) 27 August 2014 (2014-08-27) description, paragraphs 16-74 | 1, 15-22 |
| A | CN 104011558 A (HRL LABORATORIES, LLC) 27 August 2014 (2014-08-27) entire document | 2-14 |
| Y | CN 101072039 A (XIDIAN UNIVERSITY) 14 November 2007 (2007-11-14) description, page 5, line 17 to page 6, last line | 1, 15-22 |
| A | CN 101072039 A (XIDIAN UNIVERSITY) 14 November 2007 (2007-11-14) entire document | 2-14 |
| A | CN 113239554 A (UNIVERSITY OF ELECTRONIC SCIENCE AND TECHNOLOGY OF CHINA) 10 August 2021 (2021-08-10) entire document | 1-22 |
| A | US 2018329034 A1 (GM GLOBAL TECHNOLOGY OPERATIONS LLC) 15 November 2018 (2018-11-15) entire document | 1-22 |

☐ Further documents are listed in the continuation of Box C.        ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 October 2022** | **11 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/076734**

| Patent document cited in search report | | | Publication date (day/month/year) | Patent family member(s) | | | Publication date (day/month/year) |
|---|---|---|---|---|---|---|---|
| CN | 104011558 | A | 27 August 2014 | US | 2013169485 | A1 | 04 July 2013 |
| | | | | WO | 2013141924 | A2 | 26 September 2013 |
| | | | | CN | 104011558 | B | 15 March 2017 |
| CN | 101072039 | A | 14 November 2007 | | None | | |
| CN | 113239554 | A | 10 August 2021 | | None | | |
| US | 2018329034 | A1 | 15 November 2018 | DE | 102018111250 | A1 | 15 November 2018 |
| | | | | CN | 108872958 | A | 23 November 2018 |

Form PCT/ISA/210 (patent family annex) (January 2015)